(19) Europäisches Patentamt
European Patent Office
Office européen des brevets

(11) **EP 3 062 573 A1**

(12) **EUROPEAN PATENT APPLICATION**

(43) Date of publication:
**31.08.2016 Bulletin 2016/35**

(51) Int Cl.:
*H04W 72/04* (2009.01)     *H04W 72/12* (2009.01)

(21) Application number: **15305294.9**

(22) Date of filing: **26.02.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Saur, Stephan**
  **70435 Stuttgart (DE)**
• **Braun, Volker**
  **70435 Stuttgart (DE)**
• **Cesar, Bozo**
  **70435 Stuttgart (DE)**
• **Doll, Mark**
  **70435 Stuttgart (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **Apparatuses, methods and computer programs for a mobile transceiver and a base station transceiver in a mobile communication system**

(57)     Embodiments relate to apparatuses (10; 20), methods and computer programs suitable for a mobile transceiver and/or a base station transceiver in a mobile communication system. The apparatus (10) comprises a transceiver module (12) to communicate with the base station transceiver (200) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources. The transceiver module is further configured to transmit information related to a scheduling request to the base station transceiver (200) via the first uplink channel (310) using a first uplink resource from the first plurality of uplink resources, and to obtain information related to a resource occupancy on the second uplink channel (320) and information related to a queue size for network payload transmissions on the second uplink channel (320) from the base station transceiver (200) via the downlink broadcast channel (330), in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status indicates a collided, misreceived or nonexistent request for an uplink resource of the first plurality of uplink resources using a second value.

The apparatus (10) further comprises a control module (14) to determine information related to a second uplink resource of the second plurality of uplink resources, based on the information related to the plurality of request statuses and the information related to the queue size.

Fig. 2

## Description

Technical Field

Embodiments relate to apparatuses, methods and computer programs suitable for a mobile transceiver and/or a base station transceiver in a mobile communication system suitable for transmitting information related to a network payload, more particularly, but not exclusively, using a load-dependent association between first and second uplink resources.

Background

This section introduces aspects that may be helpful in facilitating a better understanding of the invention(s). Accordingly, the statements of this section are to be read in this light and are not to be understood as admissions about what is in the prior art or what is not in the prior art.

Demands for increasing the throughput of communication systems are steadily increasing. As connected devices, such as smartphones, computers, or streaming devices increase the amount of data transmitted due to a more widespread use and due to demand for more high quality services, a new category of devices is using an increasing share of the available bandwidth. The Internet of Things (IoT), which predominantly relies on Machine-to-Machine (M2M) communication, connects formerly unconnected devices, such as thermostats, household appliances, bio monitors etc. to communication systems, e.g. mobile communication systems.

Machine-to-Machine communication, especially Massive Machine-to-Machine communication (MMC) may increase the number of devices participating in communication systems. As such appliances partaking in MMC may be located in remote areas or may be mobile, MMC may also use mobile communication systems, e.g. General Packet Radio Service (GPRS), Universal Mobile Telecommunications System (UMTS) or Long Term Evolution (LTE). As, in many cases, no high quality content might be exchanged in MMC, but sparse data, such as instructions, sensory readings etc., data packets sent in MMC may comprise a small size, compared with data packets sent or received by smart phones or streaming clients.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs suitable for a mobile transceiver and/or a base station transceiver in a mobile communication system suitable for transmitting information related to a network payload. In Machine-to-Machine communication, devices may transmit small amounts of information. As using a scheduling or grant-based approach may produce substantial overhead, a more lightweight solution may be appropriate. Also, to eliminate complex functionality from a base station transceiver, complex collision detection functionality may be omitted. Embodiments may provide a scheduling request on a first uplink resource. The position of the scheduling request on the first uplink resource may indicate the position for the client on the second uplink resource. As a plurality of clients may send scheduling requests in the same time interval, to avoid collisions, the base station may provide information related to received scheduling requests and the number of outstanding packets, so clients may calculate their position on the second uplink resource based on that information.

Embodiments provide an apparatus suitable for a mobile transceiver in a mobile communication system further comprising a base station transceiver. The apparatus comprises a transceiver module to communicate with the base station transceiver using at least a first uplink channel, a second uplink channel, and a downlink broadcast channel. The first uplink channel comprises a first plurality of uplink resources. The second uplink channel comprises a second plurality of uplink resources. The transceiver module is further configured to transmit information related to a scheduling request to the base station transceiver via the first uplink channel using a first uplink resource from the first plurality of uplink resources. The transceiver module is further configured to obtain information related to a resource occupancy on the second uplink channel and information related to a queue size for network payload transmissions on the second uplink channel from the base station transceiver via the downlink broadcast channel, in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status indicates a collided, misreceived or nonexistent request for an uplink resource of the first plurality of uplink resources using a second value. The apparatus further comprises a control module to determine information related to a second uplink resource of the second plurality of uplink resources based on the information related to the plurality of request statuses and the information related to the queue size. Using the information related to the resource occupancy on the second uplink channel and information related to the queue size may enable the apparatus to calculate its position in a queue and may enable the apparatus to select one uplink resource of the second plurality of uplink resources while avoiding a collision.

In at least some embodiments, the transmission module may be further configured to transmit an information related to a network payload to the base station transceiver via the second uplink channel using a second uplink resource from the second plurality of uplink resources. The control module may be further configured to determine the information related to the scheduling request and information related to the first uplink resource and control the transmission of the information related to the scheduling request via the transceiver module based on the information related to the first uplink resource. The control module may be further configured to determine the information related to the second uplink resource based on a load-dependent association between the first and second uplink resources based on the information related to the plurality of request statuses and the information related to the queue size. The control module may be further configured to control the transmission of the information related to the network payload via the transceiver module based on the information related to the second uplink resource. Determining the information related to the second uplink resource based on the load-dependent association between the first and second uplink resources and the information related to the plurality of request statuses and the information related to the queue may decrease an overhead required for individual scheduling messages, e.g. for small messages in machine-to-machine communication, and may decrease a delay before the information related to the network payload can be sent.

In at least some embodiments, the information related to the plurality of request statuses may comprise information related to a vector. The information related to the vector may correspond to information related to a previous distribution of scheduling requests on the first plurality of uplink resources. Using a vector, e.g. a bit vector, may decrease the number of bits required to transmit information related to the load of the second uplink channel, and may enable a fast processing of the information related to the load of the second uplink channel.

In at least some embodiments, a request status may be represented by a single bit providing a binary value. In at least some embodiments, the information related to the vector may be based on a bit map. In at least some embodiments, the information related to the vector may be based on a variable length coding scheme. In at least some embodiments, the information related to the vector may be based on a run length coding scheme. In at least some embodiments, the information related to the vector may be based on a list of non-zero indices. In at least some embodiments, the information related to the vector may be based on a Huffman coding scheme. In at least some embodiments, the information related to the queue size may be based on a Huffman coding scheme. Various bit vector compression schemes might be used to decrease the number of bits for transmission and to increase the efficiency of the data transmission.

In at least some embodiments, if the information related to the previous distribution of scheduling requests on the first plurality of uplink resources indicates a misreceived scheduling request for a previous information related to the first uplink resource, the control module may be configured to determine a new information related to a scheduling request and to control the transmission of the new information related to the scheduling request via the transceiver module. The control module may be further configured to determine information related to a new uplink resource based on the information related to the new scheduling request, and to control the transmission of the information related to the network payload via the transceiver module based on the new information related to the uplink resource. If the information related to the previous distribution of scheduling requests on the first plurality of uplink resources indicates a misreceived scheduling request, the apparatus may re-start the procedure, e.g. after a random number of time-slots, and may re-calculate the information related to uplink resource, so the information related to the network payload may be sent eventually, the collision of the scheduling requests may be handled, and a new collision might be avoided.

In at least some embodiments, the transceiver module may be further configured to obtain information related to a number of first uplink resources in the first plurality of uplink resources. The control module may be configured to control the transmission of the information related to the scheduling request via the transceiver module based on the information related to the number of the first uplink resources. The control module may be further configured to determine the information related to the second uplink resource based on the information related to the number of the first uplink resources. Changing the information related to the number of first uplink resources may allow the system to adjust the load on the second uplink resources, e.g. if more capacity is needed for other types of network packages.

In at least some embodiments, the control module may be configured to control the transmission of the information related to the scheduling request based on a comparison of the information related to the queue size and information related to a queue threshold. The control module may be configured to control the transmission of the information related to the scheduling request based on a comparison of the information related to the resource occupancy and information related to a load threshold. In at least some embodiments, the transceiver module may be further configured to obtain information related to a request suspension via the downlink channel. The control module may be further configured to control the transmission of the information related to the scheduling request based on the information related to the request suspension. Pausing the transmission of scheduling requests, e.g. based on a threshold or based on information related to a request suspension may allow the system to adjust the load on the second uplink resources, e.g. if more capacity is needed for other types of network packages.

In at least some embodiments, the transceiver module may be further configured to obtain information related to an acknowledgement for the information related to the network payload via the downlink broadcast channel. If the information related to the acknowledgment comprises information related to a negative acknowledgement, the control module may be configured to determine a new information related to a scheduling request and to control the transmission of the new information related to the scheduling request via the transceiver module. The control module may be further configured to determine information related to a new uplink resource based on the information related to the new scheduling request, and to control the transmission of the information related to the network payload via the transceiver module based on the new information related to the uplink resource. If the information related to the acknowledgement indicates a failed transmission, the apparatus may re-start the procedure, e.g. after a random number of time-slots, and may re-calculate the information related to uplink resource, so the information related to the network payload may be re-sent, the collision of the information related to the network payload may be handled, and a new collision might be avoided.

Embodiments further provide an apparatus suitable for a base station transceiver in a mobile communication system. The mobile communication system further comprises one or more mobile transceivers. The apparatus comprises a transceiver module to communicate with the one or more mobile transceivers using at least a first uplink channel, a second uplink channel, and a downlink broadcast channel. The first uplink channel comprises a first plurality of uplink resources and the second uplink channel comprises a second plurality of uplink resources. The transceiver module is further configured to receive information related to one or more scheduling requests from the one or more mobile transceivers via the first uplink channel using one or more first uplink resources from the first plurality of uplink resources. The transceiver module is further configured to transmit information related to a resource occupancy on the second uplink channel and information related to a queue size for network payload transmissions on the second uplink channel to the one or more mobile transceivers via the downlink broadcast channel in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status indicates a collided, misreceived or nonexistent request for an uplink resource of the first plurality of uplink resources using a second value. The apparatus further comprises a control module to determine the information related to the resource occupancy on the second uplink channel (320) and information related to the queue size for the network payload transmissions on the second uplink channel (320) based on the information related to the one or more scheduling requests. Transmitting the information related to the network load via a broadcast channel may remove a complexity of sending individual scheduling messages, may avoid a complexity of detecting collisions of scheduling requests, may increase an efficiency of the protocol, e.g. for transmitting small messages, may decrease an overhead of the protocol, and may decrease a delay before the information related to the network payload can be sent. Using the information related to the resource occupancy on the second uplink channel and information related to the queue size may enable a mobile transceiver apparatus to calculate its position in a queue and may enable the mobile transceiver apparatus to select one uplink resource of the second plurality of uplink resources while avoiding a collision and/or without the base station apparatus determining a scheduling for the second plurality of uplink resources.

In at least some embodiments, the transceiver module may be further configured to receive information related to a network payload from the one or more mobile transceivers via the second uplink channel using one or more second uplink resources from the second plurality of uplink resources. The transceiver module may be further configured to transmit information related to an acknowledgement to the one or more mobile transceivers via the downlink broadcast channel. The control module may be further configured to determine the information related to the acknowledgement, based on the information related to the network payload. Sending an information related to an acknowledgement, which may also comprise information related to a negative acknowledgement, may enable the system to correct errors caused by collided payload packages.

In at least some embodiments, the information related to the one or more scheduling requests may comprise information related to a distribution of scheduling request on the first plurality of uplink resources. The information related to the information related to the plurality of request statuses may comprise information related to a vector. The control module may be configured to determine the information related to the vector based on the information related to the distribution of scheduling request on the first plurality of uplink resources. Using a vector, e.g. a bit vector, may decrease the number of bits required to transmit information related to the load of the second uplink channel, and may enable a fast processing of the information related to the load of the second uplink channel.

In at least some embodiments, a request status may be represented by a single bit providing a binary value. In at least some embodiments, the control module may be configured to determine the information related to the vector based on a bit map. In at least some embodiments, the control module may be configured to determine the information related to the vector based on a variable length coding scheme. In at least some embodiments the control module may be configured to determine the information related to the vector based on a run length coding scheme. In at least some embodiments, the control module may be configured to determine the information related to the vector based on a list of non-zero indices. In at least some embodiments, the control module may be configured to determine the information related to the vector based on a Huffman coding scheme. In at least some embodiments, the control module may be configured to determine the information related to the queue size based on a Huffman coding scheme. Various bit vector compression schemes might be used to decrease the number of bits and to increase the efficiency of the data transmission.

In at least some embodiments, the transceiver module may be further configured to transmit information related to a number of first uplink resources in the first plurality of uplink resources. The control module may be configured to determine the information related to a number of first uplink resources in the first plurality of uplink resources based on an information related to a load of at least a part of the mobile communication system. In at least some embodiments, the transceiver module may be further configured to transmit information related to a request suspension via the downlink channel. The control module may be further configured to determine the information related to the request suspension based on the information related to the queue size and/or based on an information related a load of at least a part of the mobile communication system. Changing the information related to the number of first uplink resources and/or pausing the transmission of scheduling requests by transmitting information related to a request suspension may allow the apparatus to adjust the load on the second uplink resources, e.g. if more capacity is needed for other types of network packages.

Embodiments further provide a method suitable for a mobile transceiver in a mobile communication system. The mobile communication system further comprises a base station transceiver. The method comprises communicating with the base station transceiver using at least a first uplink channel, a second uplink channel, and a downlink broadcast channel. The first uplink channel comprises a first plurality of uplink resources. The second uplink channel comprises a second plurality of uplink resources. The method further comprises transmitting information related to a scheduling request to the base station transceiver via the first uplink channel using a first uplink resource from the first plurality of uplink resources. The method further comprises obtaining information related to a resource occupancy on the second uplink channel and information related to a queue size for network payload transmissions on the second uplink channel from the base station transceiver via the downlink broadcast channel, in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status indicates a collided, misreceived or nonexistent request for an uplink resource of the first plurality of uplink resources using a second value. The method further comprises determining information related to a second uplink resource of the second plurality of uplink resources based on the information related to the plurality of request statuses and the information related to the queue size. Embodiments further provide a method suitable for a base station transceiver in a mobile communication system further comprising one or more mobile transceivers. The method comprises communicating with the one or more mobile transceivers using at least a first uplink channel, a second uplink channel, and a downlink broadcast channel. The first uplink channel comprises a first plurality of uplink resources. The second uplink channel comprises a second plurality of uplink resources. The method further comprises receiving information related to one or more scheduling requests from the one or more mobile transceivers via the first uplink channel using one or more first uplink resources from the first plurality of uplink resources. The method further comprises transmitting information related to a resource occupancy on the second uplink channel and information related to a queue size for network payload transmissions on the second uplink channel to the one or more mobile transceivers via the downlink broadcast channel, in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status indicates a collided, misreceived or nonexistent request for an uplink resource of the first plurality of uplink resources using a second value. The method further comprises determining the information related to the resource occupancy on the second uplink channel and the information related to a queue size for the network payload transmissions on the second uplink channel based on the information related to the one or more scheduling requests.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1    illustrates a block diagram of an embodiment of an apparatus suitable for a mobile transceiver in a mobile communication system further comprising a base station transceiver suitable for transmitting information related to a network payload;

Fig. 1a    illustrates a transaction diagram of an embodiment of an apparatus suitable for a mobile transceiver in a mobile communication system further comprising a base station transceiver suitable for transmitting information related to a network payload;

Fig. 2    illustrates a transaction diagram of an embodiment of a system.

Fig. 3    illustrates a block diagram of an embodiment of an apparatus suitable for a base station transceiver in a mobile communication system further comprising one or more mobile transceivers;

Fig. 3a    illustrates a transaction diagram of an embodiment of an apparatus suitable for a base station transceiver in a mobile communication system further comprising one or more mobile transceivers;

Fig. 4    illustrates a diagram of an exemplary embodiment;

Fig. 5    illustrates a table of an exemplary embodiment;

Fig. 6    illustrates a flow chart of an embodiment of a method suitable for a mobile transceiver in a mobile communication system further comprising a base station transceiver suitable for transmitting information related to a network payload; and

Fig. 7    illustrates a flow chart of an embodiment of a method suitable for a base station transceiver in a mobile communication system further comprising one or more mobile transceivers;

Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Massive Machine Communication (MMC) is expected to create a large amount of traffic volume in future wireless networks, in particular involving small payload packets. An issue with small packets in current wireless broadband systems such as LTE is that the signaling overhead may be large compared to the payload, thus making the transmission of small payload packets very inefficient. Embodiments may focus on the uplink transmission of small data packets.

It may be assumed that efficient MMC techniques may be integrated into a wireless broadband system. The MMC devices are typically low-cost and their functionality may be reduced as compared to a conventional user equipment (smartphone, tablet, etc.). Also the power consumption of MMC devices may be decreased by adequate design of the air interface.

A multi-carrier system (Orthogonal Frequency-Division Multiplexing (OFDM), Universal Filtered Multi-Carrier (UFMC), Single-Carrier Frequency-Division Multiple Access (SC-FDMA), Filter-Bank Multi Carrier (FBMC), etc.) with resource allocation in Transmission Time Intervals (TTI) and frequency resources (subcarriers or resource blocks similar to LTE) may be assumed.

In one embodiment, it may be assumed that (typically after a random access procedure) a mobile transceiver may be known by the network, has exchanged a short User Equipment Identification (UE ID) (similar to Cell-Radio Network Temporary Identity (C-RNTI) in LTE) and the uplink (UL) may be time-synchronized (e.g. within accuracy of cyclic prefix). However, also embodiments using asynchronous uplink transmissions may be applied.

In LTE, a device may be assigned periodic contention-free resources of a shared scheduling request channel. In LTE these Scheduling Requests (SRs) may be carried on an uplink control channel (e.g. Physical Uplink Control CHannel (PUCCH)). If the device has data to transmit, it may wait for the TTI with its scheduling request resource and transmit a scheduling request, then receive a user-specific uplink scheduling grant in the downlink and then transmit uplink data.

With a massive number of devices per cell, a significant fraction of uplink resources might be occupied by SR resources, which may be limited only at the cost of access latency by increasing the periodicity of a device's SR resource. For example, with typically 18 SR resources per Resource Block (RB), i.e. per 12 subcarriers and per TTI, and a SR periodicity of Is, SR resources of 90000 devices may occupy 10 % of a 10 MHz LTE carrier (the currently maximum possible SR periodicity in LTE is 80 ms, i.e. 90 k mobile transceivers may be impossible with LTE, also because a 16 bit C-RNTI may limit the number of supported active devices to 65536).

The UL transmission of a small packet may hence require a full scheduling grant on a downlink control channel (Downlink Control Information (DCI) on a Physical Downlink Control CHannel (PDCCH)). This may involve a high signaling overhead, while not all the benefits of a full scheduling grant might be harvested, as e.g. the buffer filling of the device might not be known.

A protocol that may be considered more efficient than LTE for small packets with respect to resource usage is known as Distributed Queuing Random Access Protocol (DQRAP). It relies on contention-based SRs. After a successful (not collided) SR, the device may enter a queue and may wait for contention-free data transmission. If two devices utilize the same SR resources, a collision may occur. Collision resolution may be organized through a second queue and may exploit tree-splitting, i.e. the collision probability for SRs may be reduced with each re-transmission. Prerequisite may be that collisions of SRs can be detected at the base station. This may come along with either a significant additional signal processing at the Base Station (BS), or with a considerable overhead (equivalent to very high over-provisioning of SR resources). In any case, a remaining error probability (SR collisions that could not be detected) may diminish the theoretically optimal performance of DQRAP with respect to packet throughput.

In at least some embodiments, the basic idea may be to combine the simplicity of a scheduling scheme that is based on individual grants of Uplink Resources (UR) after a SR, with the resource efficiency of a queuing based scheme in a smart way. In contrast to DQRAP, collision detection on SR resources at the base station is not required, and the second queue for collision resolution of SRs is obsolete.

In at least some embodiments, it may be assumed that M URs (on second uplink channel), and $N \cdot$ M SR opportunities (on resources of first uplink channel) may be available per uplink TTI (or in a sub-sets of TTIs), where $N$ is an over-provisioning factor. Each UR may have an index m (m = 1 ... M) and each SR may have an index r (r = 1 ... $N \cdot M$).

The respective downlink signaling channel may comprise a queue length Q indicating the number of devices waiting for data transmission and a binary status vector V for the $N \cdot$ M SRs. (e.g. 0 = SR is empty, 1 = SR is occupied). This may be a broadcast feedback, i.e. all devices may receive and evaluate the same information. No blind searches for individual grants might be required.

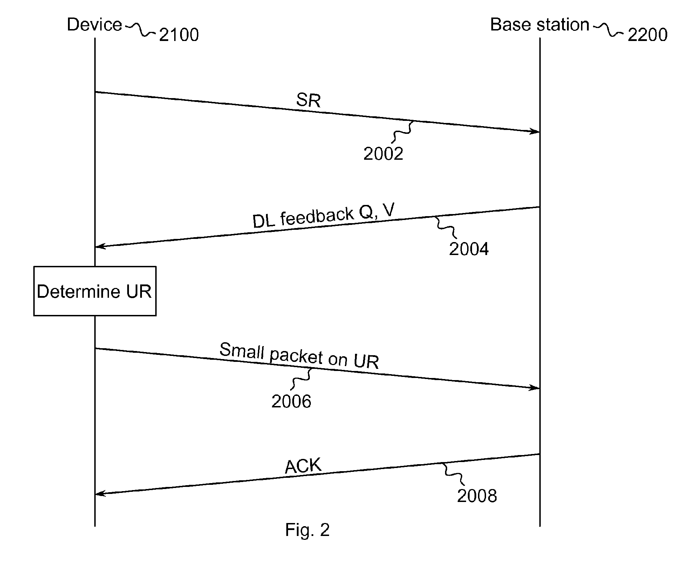

A basic protocol of at least some embodiments may be described as follows (see Fig. 2):

- A device 2100 that has a small packet to transmit may send 2002 a SR on an arbitrary SR resource r = R to a base station 2200.
- After a pre-defined or flexibly configured number of TTIs the device 2100 may read the downlink feedback Q and V 2004 and may calculate a pointer $P$ to a specific Uplink Resource (e.g. TTI number and uplink resource index m).
- After the transmission 2006 of the small packet on said UR, the device may await an ACK/NACK 2008. In case of a NACK, e.g. after a collision with another device that has initially utilized the same SR r=R, and consequently calculated the same pointer P, the procedure may be repeated after a back-off time.

Embodiments may be applicable with contention-based SR transmission, or with contention-free SR transmission, e.g. user-specific periodic SR resources as used on LTE PUCCH. Embodiments may provide approaches for control and data transmission, primarily in the context of Massive Machine Communication (MMC) using a wireless broadband system.

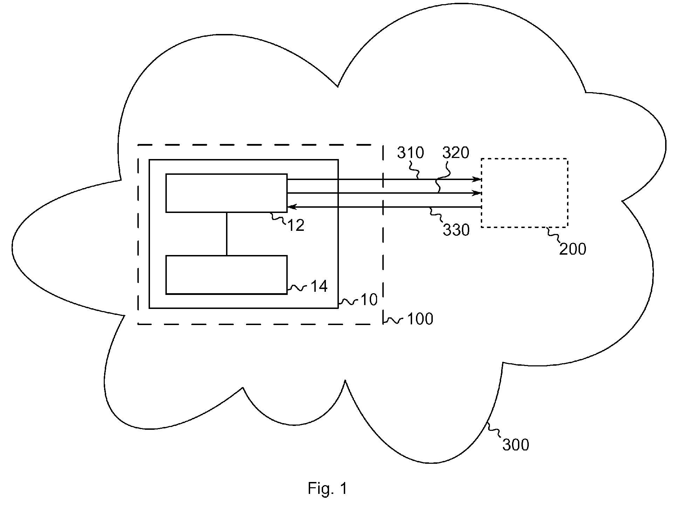

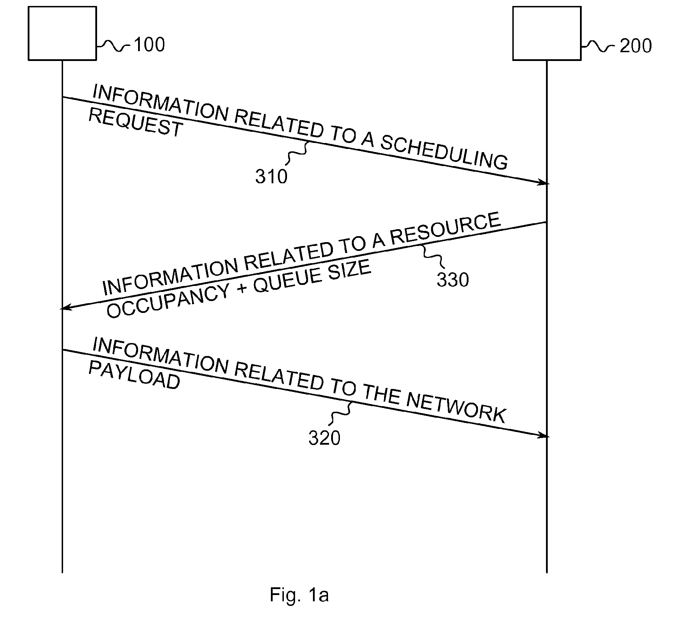

Fig. 1 illustrates a block diagram of an embodiment of an apparatus 10 suitable for a mobile transceiver 100 in a mobile communication system 300. The mobile communication system 300 further comprises a base station transceiver 200.

In general, the mobile communication system may, for example, correspond to one of the Third Generation Partnership Project (3GPP)-standardized mobile communication networks, where the term mobile communication network is used synonymously to mobile communication system. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication systems with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

The apparatus comprises a transceiver module 12 to communicate with the base station transceiver 200 using at least a first uplink channel 310, a second uplink channel 320, and a downlink broadcast channel 330.

The transceiver module 12, and correspondingly the transceiver module 22 as will be introduced in the sequel, may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The first uplink channel 310 comprises a first plurality of uplink resources. The second uplink channel 320 comprises a second plurality of uplink resources. In at least some embodiments, the first uplink channel may occupy less radio resources than the second uplink channel. In at least some embodiments, an uplink resource of the first plurality of uplink resources may be used to transmit fewer bits than an uplink resource of the second plurality of uplink resources. In at least some embodiments, an uplink resource may correspond to at least one element of the group of a time resource, a carrier frequency resource, a code resource, and a spatial resource. In at least some embodiments, a time resource may correspond to at least one element of the group of a radio frame, a radio subframe, a radio slot, a radio subslot, and a radio symbol. A carrier frequency resource may correspond to at least one element of the group of a frequency carrier, a frequency subcarrier, an Orthogonal Frame Division Multiplexing (OFDM) subcarrier etc. A code resource may correspond to at least one element of the group of a spreading code, a Zadoff-Chu sequence, a channelization code, a scrambling code, an interleaving sequence, and an Orthogonal Variable Spreading Factor (OVSF) code. A spatial resource may correspond to at least one element of the group of a spatial channel, a spatial subchannel, an antenna, a beam, a polarization direction, a spatial multiplexing channel, and a spatial multiplexing subchannel.

In at least some embodiments, an uplink resource of the first plurality of uplink resources may be used to transmit a single bit or a short sequence of bits per timeframe. In at least some embodiments, the first uplink channel 310 and/or the second uplink channel 320 may correspond to a random access uplink channel.

The transceiver module 12 is further configured to transmit information related to a scheduling request to the base station transceiver 200 via the first uplink channel 310 using a first uplink resource from the first plurality of uplink resources. In at least some embodiments, the information related to the scheduling request may correspond to a single bit or a short sequence of bits. In at least some embodiments, the information related to the scheduling request may relate to the first uplink resource.

The transceiver module 12 is further configured to obtain information related to a resource occupancy on the second uplink channel 320 and information related to a queue size for network payload transmissions on the second uplink channel 320 to the one or more mobile transceivers 100 via the downlink broadcast channel 330, in response to the information related to the scheduling request. The information related to the resource occupancy comprises information related to a plurality of request statuses for the first plurality of uplink resources.

In embodiments, the information related to the plurality of request statuses may correspond to information related to a previous distribution of scheduling requests on the first plurality of uplink resources. In embodiments, the information related to the queue size may be based on a number of processed network payloads at the base station transceiver 200.

A request status indicates a granted request for an uplink resource of the first plurality of uplink resources using a first value. The request status further indicates a collided, misreceived or nonexistent request for an uplink resource of the first plurality of uplink resources using a second value. In at least some embodiments, when two or more mobile transceivers transmit scheduling requests using the same first uplink resource from the first plurality of uplink resources, the base station transceiver 200 may either fail to receive and decode the request and indicate a misreceived/collided request using the second value, or the scheduling requests may align well and the base station transceiver 200 may receive the two or more requests as a single request, indicating a granted request using the first value. In latter case, when the two or more transceivers transmit the payload using the same second uplink resource of the second plurality of uplink resources, the base station transceiver 220 may fail to decode the payload information and return a negative acknowledgement for the uplink resource, which may cause the mobile transceivers to restart the request procedure, as described in more detail below.

In at least some embodiments, the information related to the information related to the plurality of request statuses may comprise information related to a vector. The information related to the vector may correspond to information related to a previous distribution of scheduling requests on the first plurality of uplink resources. In at least some embodiments a request status may be represented by a single bit providing a binary value. In at least some embodiments, the information related to the vector may be based on a bit map, a variable length coding scheme, a run length coding scheme, a list of nonzero indices, or a Huffman coding scheme. In at least some embodiments, the information related to the queue size may be based on a Huffman coding scheme.

In at least some embodiments, the transceiver module 12 may be further configured to transmit information related to a network payload to the base station transceiver 200 via the second uplink channel 320 using a second uplink resource from the second plurality of uplink resources. In embodiments, the information related to the network payload may correspond to a sequence of bit values to be sent from the mobile transceiver 100 to a device comprised in the mobile communication system 300 and/or connected to the mobile communication system 300. In at least some embodiments, the information related to the network payload may comprise machine-to-machine communication and/or the information related to the network payload may be comprised in one network package.

Fig. 1a illustrates a transaction diagram of an embodiment of the apparatus 10. The apparatus 10 comprised in the mobile transceiver 100 transmits the information related to the scheduling request to the base station transceiver 200 via the first uplink channel 310. The mobile transceiver 100 then obtains the information related to a resource occupancy on the second uplink channel 320 and information related to a queue size for network payload transmissions on the second uplink channel 320 via the downlink broadcast channel 330, in response to the information related to the scheduling request. In at least some embodiments, the mobile transceiver 100 may then transmit the information related to the network payload to the base station transceiver 200 via the second uplink channel 320.

The apparatus 10 further comprises a control module 14 to determine information related to a second uplink resource of the second plurality of uplink resources, based on the information related to the plurality of request statuses and the information related to the queue size. The transceiver module 12 is coupled to the control module 14. In at least some embodiments, the control module 14 may determine the information related to the second uplink resource based on a number of granted requests based on the plurality of request statuses and an offset based on the information related to the queue size.

In at least some embodiments, the control module 14 may be configured to determine the information related to the scheduling request and information related to the first uplink resource. In at least some embodiments, the information related to the first uplink resource corresponds to a selection of one uplink resource of the first plurality of uplink resources. In at least some embodiments, the selection of the uplink resource may be static for each determination of the information related to the scheduling request or the selection of the uplink resource may be random for each determination of the information related to the scheduling request.

In at least some embodiments, the control module 14 may be further configured to control the transmission of the information related to the scheduling request via the transceiver module 12 based on the information related to the first uplink resource. In at least some embodiments, the control module 14 may control the transmission of the information related to the scheduling request such, that the information related to the scheduling request is transmitted using the selected uplink resource of the first plurality of uplink resources, which may correspond to the first uplink resource.

In at least some embodiments, the control module 14 may be further configured to determine information related to the second uplink resource based on a load-dependent association between the first and second uplink resources based on the information related to the plurality of request statuses and the information related to the queue size. In various embodiments, a combined queue size, based on the information related to the queue size and a subset of the information related to the information related to the plurality of request statuses may be used to determine the information related to the second uplink resource.

In at least some embodiments, the control module 14 may be further configured to control the transmission of the information related to the network payload via the transceiver module 12 based on the information related to the second uplink resource. In at least some embodiments, the control module 14 may control the transmission of the information related to the network payload such, that the information related to the scheduling request is transmitted using the second uplink resource.

In embodiments the control module 14, and correspondingly the control module 24 as will be introduced in the sequel, may be implemented using one or more processing units, one or more processing devices, any means for processing, such as a processor, a computer or a programmable hardware component being operable with accordingly adapted software. In other words, the described functions of the control modules 14, 24 may as well be implemented in software, which is then executed on one or more programmable hardware components. Such hardware components may comprise a general purpose processor, a Digital Signal Processor (DSP), a micro-controller, etc.

In at least some embodiments, if the information related to the previous distribution of scheduling requests on the first plurality of uplink resources indicates a misreceived scheduling request for a previous information related to the first uplink resource, the control module 14 may be configured to determine a new information related to a scheduling request, to control the transmission of the new information related to the scheduling request via the transceiver module 12, to determine information related to a new uplink resource based on the information related to the new scheduling request, and to control the transmission of the information related to the network payload via the transceiver module 12 based on the new information related to the uplink resource. In at least some embodiments, the control module 14 may repeat the determination and transmission of the information related to the scheduling request if the information related to the previous distribution of scheduling requests on the first plurality of uplink resources indicates a misreceived scheduling request for a previous information related to the first uplink resource. In at least some embodiments, the indication for the misreceived scheduling request may correspond to a zero bit in the information related to the vector at a position corresponding to the first uplink resource. In at least some embodiments, the control module 14 may wait a random or ranged random amount of time before repeating the determination and transmission of the information related to the scheduling request.

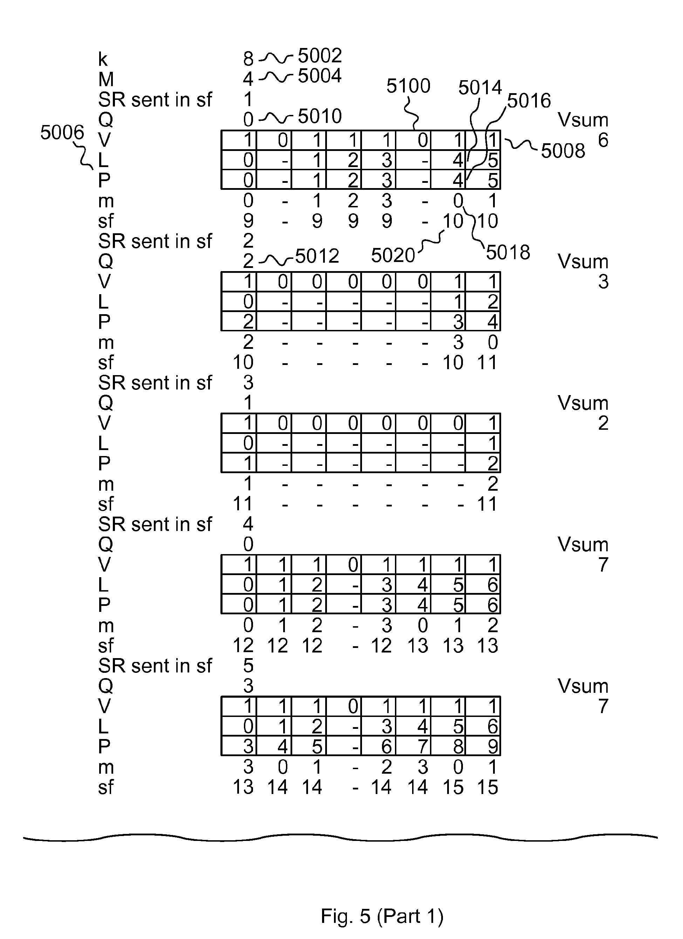

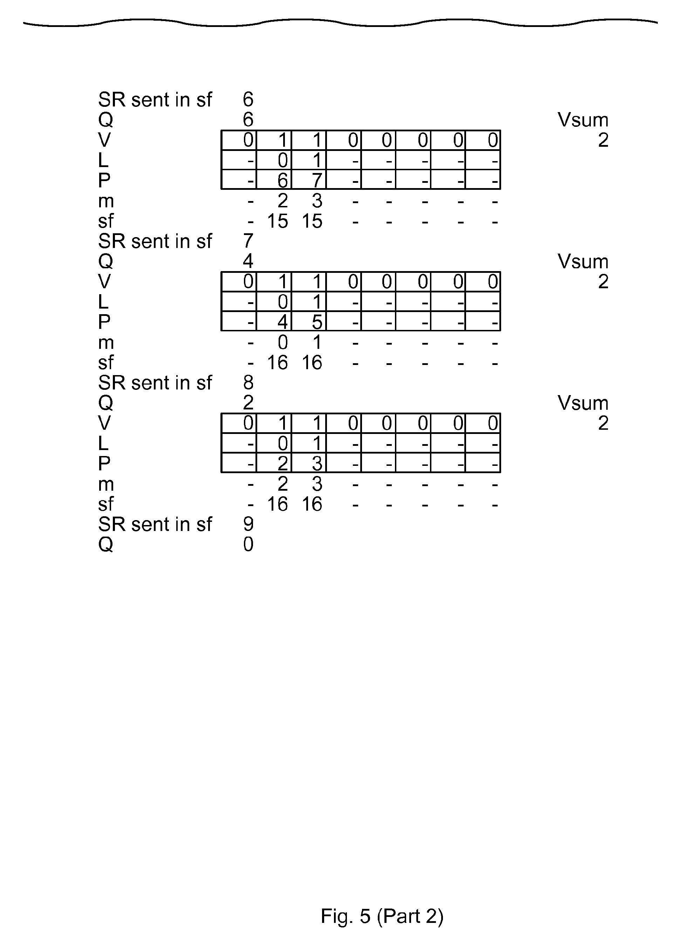

In at least some embodiments, the transceiver module 12 may be further configured to obtain information related to a number of first uplink resources in the first plurality of uplink resources. In at least some embodiments, the transceiver module 12 may be configured to obtain the information related to the number via the downlink channel 330 and/or via dedicated device-specific signaling, e.g. during an initialization phase, via the Physical Downlink Shared Channel (PDSCH) or the Physical Uplink Shared Channel (PUSCH) in LTE for example. The control module 14 may be configured to control the transmission of the information related to the scheduling request via the transceiver module 12 based on the information related to the number of first uplink resources. The control module 14 may be further configured to determine the information related to the second uplink resource based on the information related to the number of first uplink resources. An example will be given below (Fig. 5).

In at least some embodiments, the control module 14 may be configured to control the transmission of the information related to the scheduling request based on a comparison of the information related to the queue size and information related to a queue threshold. The control module 14 may be configured to control the transmission of the information related to the scheduling request based on a comparison of the information related to the resource occupancy and information related to a load threshold. An example will be given below (Fig. 5).

In various embodiments, the transceiver module 12 may be further configured to obtain information related to a request suspension via the downlink channel 330. The control module 14 may be further configured to control the transmission of the information related to the scheduling request based on the information related to the request suspension. An example will be given below (Fig. 5).

In at least some embodiments, the transceiver module 12 may be further configured to obtain information related to an acknowledgement for the information related to the network payload via the downlink broadcast channel 330. If the information related to the acknowledgment comprises information related to a negative acknowledgement, the control module 14 may be configured to determine a new information related to a scheduling request, to control the transmission of the new information related to the scheduling request via the transceiver module 12, to determine information related to a new uplink resource based on the information related to the new scheduling request, and to control the transmission of the information related to the network payload via the transceiver module 12 based on the new information related to the uplink resource. In at least some embodiments, the control module 14 may repeat the determination and transmission of the information related to the scheduling request if the information related to the acknowledgment comprises information related to a negative acknowledgement. In at least some embodiments, the control module 14 may wait a random or ranged random amount of time before repeating the determination and transmission of the information related to the scheduling request. In at least some embodiments, the information related to the acknowledgement may correspond to a bit vector, and the information related to a negative acknowledgement may correspond to a zero bit in the bit vector at a position corresponding to the second uplink resource. In at least some embodiments, the information related to the acknowledgement may correspond to a bit vector representing the second plurality of uplink resources, transmitted on the downlink broadcast channel 330.

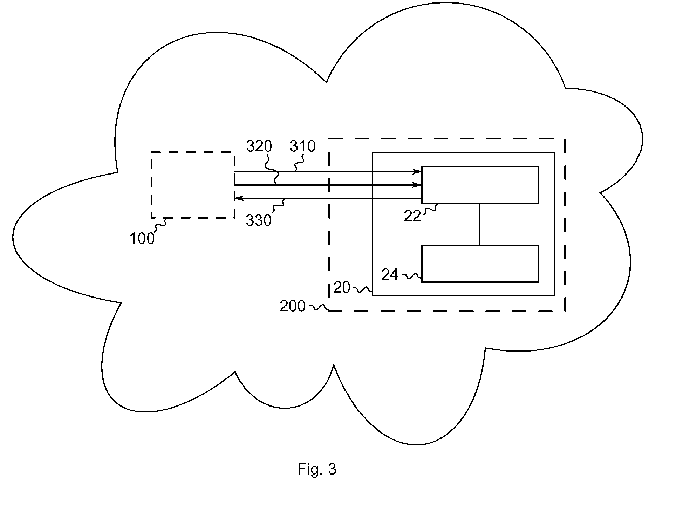

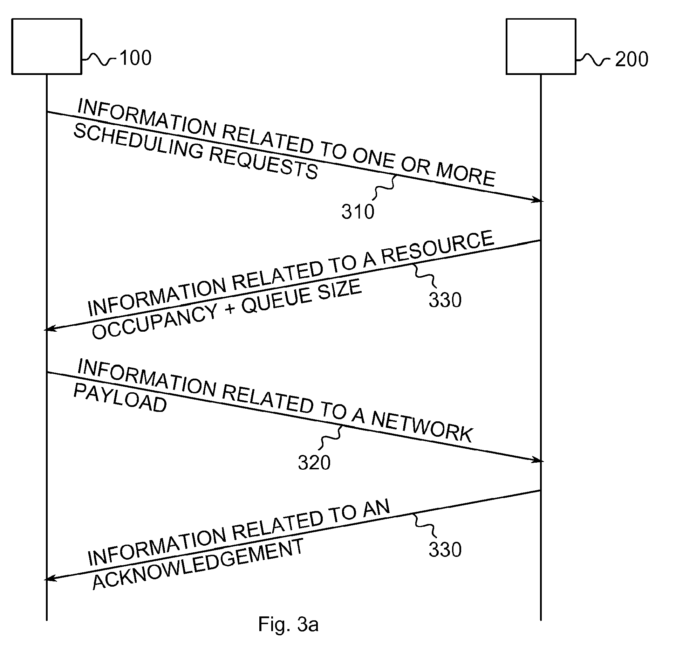

Fig. 3 illustrates a block diagram of an embodiment of an apparatus 20 suitable for a base station transceiver 200 in a mobile communication system 300. The mobile communication system 300 further comprises one or more mobile transceivers 100. The apparatus comprises a transceiver module 22 to communicate with the one or more mobile transceivers 100 using at least a first uplink channel 310, a second uplink channel 320, and a downlink broadcast channel 330. The first uplink channel 310 comprises a first plurality of uplink resources, and the second uplink channel 320 comprises a second plurality of uplink resources.

The transceiver module 22 is configured to receive information related to one or more scheduling requests from the one or more mobile transceivers 100 via the first uplink channel 310 using one or more first uplink resources from the first plurality of uplink resources. In at least some embodiments, the information related to the one or more scheduling requests may comprise one or more scheduling requests transmitted by the one or more mobile transceivers 100.

The transceiver module 22 is further configured to transmit information related to a resource occupancy on the second uplink channel 320 and information related to a queue size for network payload transmissions on the second uplink channel 320 to the one or more mobile transceivers 100 via the downlink broadcast channel 330, in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status further indicates a collided, misreceived or nonexistent request for an uplink resource of the first plurality of uplink resources using a second value. In at least some embodiments, when two or more mobile transceivers transmit scheduling requests using the same first uplink resource from the first plurality of uplink resources, the base station transceiver 200 may either fail to receive and decode the request and indicate a misreceived request using the second value, or the scheduling requests may align well and the base station transceiver 200 may receive the two or more requests as a single request, indicating a granted request using the first value. In latter case, when the two or more transceivers transmit the payload using the same second uplink resource of the second plurality of uplink resources, the base station transceiver 220 may fail to decode the payload information and return a negative acknowledgement for the uplink resource, which may cause the mobile transceivers to restart the request procedure, as described in more detail below.

In at least some embodiments, the transceiver module 22 may be further configured to receive information related to a network payload from the one or more mobile transceivers 100 via the second uplink channel 320 using one or more second uplink resources from the second plurality of uplink resources. In at least some embodiments, the information to the network payload may comprise one or more network payloads transmitted by the one or more mobile transceivers 100.

In at least some embodiments, the transceiver module 22 may be further configured to transmit information related to an acknowledgement to the one or more mobile transceivers 100 via the downlink broadcast channel 330.

Fig. 3a illustrates a transaction diagram of an embodiment of the apparatus 20. The one or more mobile transceivers 100 transmit the information related to the one or more scheduling requests to the base station transceiver 200 via the first uplink channel 310. The one or more mobile transceivers 100 then obtain the information related to a resource occupancy on the second uplink channel 320 and the information related to the queue size for network payload transmissions on the second uplink channel 320 via the downlink broadcast channel 330, in response to the information related to the scheduling request. In at least some embodiments, the one or more mobile transceivers 100 then transmit the information related to the network payload to the base station transceiver 200 via the second uplink channel 320. In response, the base station transceiver may transmit the information related to the acknowledgement via the downlink broadcast channel 330.

The apparatus 20 further comprises a control module 24 to determine the information related to the load of the second uplink channel 320 based on the information related to the one or more scheduling requests. The transceiver module 22 is coupled to the control module 24.

In at least some embodiments, the information related to the one or more scheduling requests may comprise information related to a distribution of scheduling requests on the first plurality of uplink resources.

In at least some embodiments, the information related to the plurality of request statuses may comprise information related to a vector. The control module 24 may be configured to determine the information related to the vector based on the information related to the distribution of scheduling requests on the first plurality of uplink resources.

In at least some embodiments a request status may be represented by a single bit providing a binary value. In at least some embodiments, the control module 24 may be configured to determine the information related to the vector based on a bit map. In at least some embodiments, the control module 24 may be configured to determine the information related to the vector based on a variable length coding scheme. In at least some embodiments, the control module 24 may be configured to determine the information related to the vector based on a run length coding scheme. In at least some embodiments, the control module 24 may be configured to determine the information related to the vector based on a list of non-zero indices. In at least some embodiments, the control module 24 may be configured to determine the information related to the vector based on a Huffman coding scheme.

In at least some embodiments, the control module 24 may be configured to determine the information related to the queue size based on a Huffman coding scheme.

The apparatus 24 is further configured to determine the information related to the acknowledgement based on the information related to the network payload. In at least some embodiments, the information related to the acknowledgement may be based on information related to a checksum comprised in the information related to the network payload and/or information related to garbled data in one or more uplink resources of the second plurality of uplink resources.

In at least some embodiments, the transceiver module 22 may be further configured to transmit information related to a number of first uplink resources in the first plurality of uplink resources. In at least some embodiments, the transceiver module 22 may be configured to transmit the information related to the number via the downlink channel 330 and/or via dedicated device-specific signaling, e.g. during an initialization phase, via the Physical Downlink Shared Channel (PDSCH) or the Physical Uplink Shared Channel (PUSCH) in LTE for example.. The control module 24 may be configured to determine the information related to a number of first uplink resources in the first plurality of uplink resources based on an information related to a load of at least a part of the mobile communication system 300. An example will be given below (Fig. 5).

In at least some embodiments, the transceiver module 22 may be further configured to transmit information related to a request suspension via the downlink channel 330. The control module 24 may be further configured to determine the information related to the request suspension based on the information related to the queue size and/or based on an information related a load of at least a part of the mobile communication system 300. An example will be given below (Fig. 5).

More details and aspects of the apparatus 20 (first uplink channel 310, second uplink channel 320, downlink broadcast channel 330, first plurality of uplink resources, second plurality of uplink resources, information related to scheduling request, mobile transceiver 100, uplink resource, base station transceiver 200, information related to a plurality of request statuses, information related to the network payload, information related to the acknowledgement, information related to the resource occupancy, information related to the queue size, information related to the distribution of the scheduling requests, information related to the vector etc.) are mentioned in connection with the proposed concept or one or more examples described above (e.g. Fig. 1-1a). The apparatus 20 may comprise one or more additional optional features corresponding to one or more aspects of the proposed concept or one or more examples described above or below.

In an exemplary implementation, M Uplink Resources (UR), which may correspond to the second plurality of uplink resources, per Transmission Time Interval (TTI) may be assumed. One UR may span over consecutive time symbols and sub-carriers, equivalent to one Resource Block (RB) in LTE, for example. A Scheduling Request (SR), which may correspond to the information related to the scheduling request, may be represented by a code sequence that is mapped on the time-frequency resources of additional RBs of the same TTI. In at least some embodiments, the SR may be mapped on the time-frequency resources of a TTI with a specified offset. Different code sequences might be detected through orthogonality, but if two devices utilize the same sequence, i.e. the same SR, this collision might not be detected.

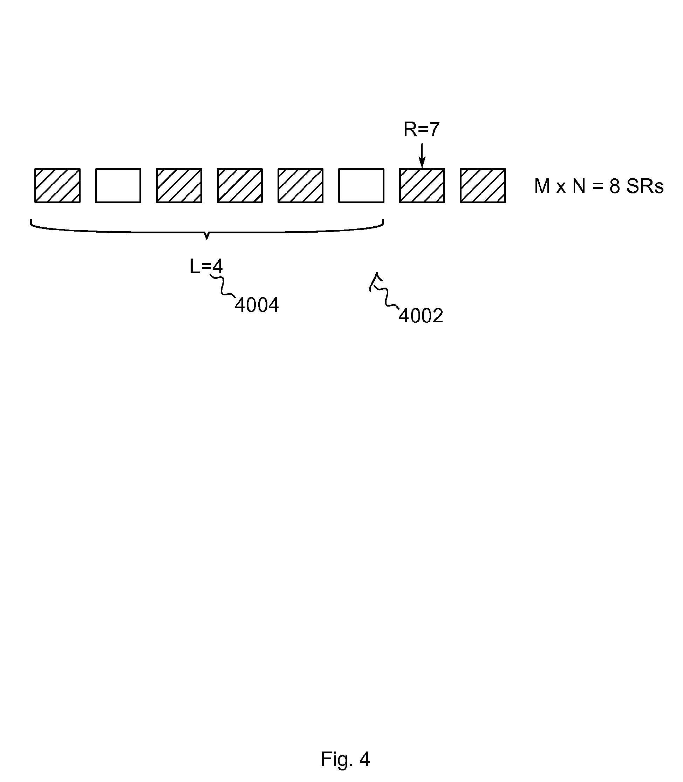

An occupied SR resource may be indicated in the feedback vector V, which may correspond to the information related to the resource occupancy and/or the information related to the vector, by the value "1", and an empty resource by the value "0". Thus, in at least some embodiments, the feedback vector V may consist of $N \cdot M$ bits. An apparatus 10 that has sent its SR on the resource $r = R$, which may correspond to the first uplink resource, may first check the $R$-th entry in $V$, and if it finds a "1", it may then check the first $R - 1$ entries in V and count the values "1". The result of this operation is referred to as L in the following. Figure 4 shows an example 4002 with $N \cdot M = 8$ SRs. The example device has selected $R = 7$. The example binary feedback is the vector V = [1 0 1 1 1 0 1 1]. The apparatus 10 may detect "1" at the position "$R = 7$" of V, and may then evaluate the first $R - 1 = 6$ bits and find L = 4 occupied SRs. A more detailed explanation of the required calculations at the apparatus 20 and at the apparatus 10 based on this example is given below.

The queue length Q, which may correspond to the information related to the queue size, might be signaled as integer value between 0 and $Q_{max}$. For example, if 2 Bytes are spent for Q, then $Q_{max}$ may be 65535 ($2^{16} - 1$).

Each mobile transceiver 100 may calculate its pointer P, which may correspond to the second uplink resource, as $P = Q + L$, i.e. devices that have selected different SRs in the same TTI may receive the same queue length, but may determine different values L, and thus different pointers P. If $P \geq M$, the device might not send its small packet in the earliest possible TTI, but with some additional delay. If the device has sent the SR in the TTI with time index $i$, then it may send its small packet in the TTI with index $i + x$ if $P < M$, in TTI $i + x + 1$ if $M \leq P < 2M$, etc.. The relation between TTI index, UR index m and P may be exemplified in the following table with $x = 8$, i.e. LTE typical 8 sub-frames delay between SR and data-transmission.

|  | TTI $i + 8$ | TTI $i + 9$ | TTI $i + 10$ |
|---|---|---|---|
| UR $m = 0$ | $P = 0$ | $P = M$ | $P = 2M$ |
| UR $m = 1$ | $P = 1$ | $P = M + 1$ | $P = 2M + 1$ |
| ... | ... | ... | ... |

(continued)

|  | TTI $i + 8$ | TTI $i + 9$ | TTI $i + 10$ |
|---|---|---|---|
| UR $m = M$-1 | $P = M - 1$ | $P = 2M - 1$ | $P = 3M - 1$ |

Figure 4 and Figure 5 show an example embodiment with $N \cdot M = 8$ SRs 5002, M = 4 URs 5004. For the sake of simplicity, the case where at least two devices select the same SR, i.e. a collision occurs on SR resources, is left out in the following example. Such a collision on SR resources might not be detectable by the base station and may lead to simultaneous data transmission of the at least two devices on the same UR resources (same TTI, same index $m$). In the general case, the collided data of the devices might not be decoded, and the base station may send a NACK as described in the description (Fig. 2). In Fig. 5, the first column indicates the information being represented and the second and consecutive columns represent their value. In the subtables, e.g. 5100, each column represents a scheduling request, so the eight columns represent the first plurality of uplink resources.

In subframe $i = 1$ 5006, 6 devices may transmit a scheduling request, i.e. they may select 6 different out of 8 available SR resources, for example.

From the observed SR resources, the base station transceiver apparatus 20 may generate the following feedback for sub-frame 1: $V = [1\ 0\ 1\ 1\ 10\ 1\ 1]$ 5008 (the device gets the feedback e.g. in sub-frame $i + 4$). When a bit in the vector V is set, it may mean that the base station detected that the corresponding SR was selected by one of the devices.

Further, the base station transceiver apparatus 20 may feedback the value Q 5010, which may correspond to the information related to the queue size (in this example it is assumed to be 0 in this sub-frame). Then the base station apparatus 20 may perform the following calculations:

Sum of 1-bits in $V$: $V_{sum} = 6$
Q for next sub-frame: $Q = max(Q + V_{sum} - M; 0)$; $Q = 0 + 6 - 4 = 2$. (5012)

The computation of Q here may assume that the base station transceiver apparatus 20 always aims at granting all the M available URs (more generally $Q = Q + V_{sum} - M'$, where $0 \leq M' \leq M$ denotes the URs actually granted by the base station).

When an mobile transceiver apparatus 10 has randomly selected a SR which it finds represented by a 1 at index $r = R$ in the vector V, it may perform the following calculations:

L is the sum of 1-bits in V between index r = 1 and R - 1.

In the example the considered device has selected $R = 7$. The example binary feedback is the vector [1 0 1 1 1 0 1 1] 5008. The mobile transceiver apparatus 10 detects a 1 at the position $R = 7$ of $V$, and evaluates the first $R - 1 = 6$ bits and finds $L = 4$ utilized SRs 5014.

In the example, the mobile transceiver apparatus 10 may calculate:

$$P \; = \; Q \; + \; L; P = 4 \qquad 5016$$

From $P$ the mobile transceiver apparatus 10 may calculate the grant coordinates (subframe $sf$ and UR index m) for the uplink resource in which it will be allowed to transmit data:

- $m = P \bmod M$ 5018
- $sf$ = sub-frame in which it transmitted SR + $x$ + ($P \operatorname{div} M$) 5020

In the illustrated example $x = 8$.

In Figure 5 the scenario is shown for a few consecutive sub-frames starting with sub-frame 1. The content of V in each sub-frame is randomly selected. In the Figure 5, $V$ for sub-frame $i$ is shown in the same sub-frame - even though in reality it may be broadcasted to the devices e.g. in sub-frame $i + 4$.

A side effect of the queuing based scheduling mechanism is that the feedback Q and V may indicate the current traffic load. A new device may read $Q$ and $V$ in the downlink feedback prior to the initial SR transmission and may assess its minimal waiting time. If values "1" predominate in $V$, SR collisions may be likely, and the device may abstain from sending a scheduling request for some time if possible, or connect to a different cell.

Additionally or alternatively, devices that see their SR being detected may send in UL with probability $p$, i.e. devices transmit in UR with $p$-persistence instead of 1-persistence. The probability $p$ may be the inverse of the overbooking, p = $V_{sum}$/#SR, with #SR denoting the number of sent SR and $V_{sum}$ denoting the number of bits set in V. Since #SR may be unknown, it may be derived under the assumption of a certain probability distribution $Pr(X = \#SR)$, e.g. the one resulting from a poisson arrival process with an intensity depending on $Q$, the size of $V$, if the number of SR per TTI and thereby V may be adapted to the load, or according to a broadcasted load value. Instead of the expected value, a certain quantile of its cumulative distribution function $Pr(X < \#SR)$ may be chosen to better trade-off between likelihood of collisions and likelihood of unused URs (both of which may reduce efficiency), possibly taking multi-user reception capabilities of the base station for URs into account. In some embodiments the probability $p$ may be calculated by the base station and be signaled in downlink to the devices, e.g. on downlink broadcast channel 330.

In a further embodiment the transmission of new SRs may be forbidden for some service classes if Q exceeds a predefined or flexibly configured value. Alternatively, an additional downlink feedback flag, which may correspond to the information related to the request suspension, may be introduced that signals if new SRs may be transmitted or not. This may be helpful if a lot of previous collisions must be resolved by re-transmissions at first.

In another embodiment the abovementioned downlink feedback flag may be utilized if the network intends to serve other service types with higher priority, e.g. mobile broadband traffic instead of small packets, and may thus prevent the machine devices from sending SRs. In other words, the flag may indicate whether or not the M URs are currently available for small packets. In another embodiment, the number of SR per TTI may be adapted to the current load, e.g. using the information related to the number of first uplink resources. For example, if more than a fraction b of bits in V are set, the number of SR may be set to $a \cdot (V_{sum} - b) \cdot N \cdot M$ with $a$ denoting a configurable adaption speed factor. Alternatively, the number of SR per TTI may be adapted by a fixed amount $c \cdot sgn(V_{sum} - b)$ with configurable step size c.

Further embodiments may address the format of the vector V. As explained above, $N \cdot M$ bits may be required to indicate the status of each single SR (occupied or not), for example, by means of a bit map. The same information may be also signaled in alternative formats $V'$, which may reduce the number of required bits.

In at least some embodiments, $V'$ may consist of one bit indicating whether the following values refer to "0" or "1", followed by the distances between the occurrence of the respective value (e.g. for V = [1 0 1 1 1 0 1 1] distances 2 and 4, for 0-positions 2 and 6). This run length coding scheme may be helpful if one of the two values predominate the vector V.

In various embodiments, $V'$ may be represented as a list of non-zero indices, e.g. V = [1 0 0 0 0 0 1 0] might be represented as $n = 2$ non-zero indices and list of indices $l = \{1,7\}$. Special values of $n$, e.g. $n = n_{max}$ and $n = n_{max} - 1$ may indicate that bitmap coding or run length coding may be used, instead.

In at least some embodiments, prefix-free source coding may be applied to the vector V. The known Huffman coding scheme may decrease the mean codeword length and may be based on the probabilities of all possible vectors V. In consequence the vector V with the highest probability may translate to $V'$ with the shortest codeword length, and vice versa. In a situation with high small packet load in the network a vector V = [1 1 1 1 1 1 1 1] may be much more likely than $V = [0 0 0 0 0 0 0]$. A valid mapping table between $V$ and $V'$ might be updated e.g. once per hour via downlink broadcast based on traffic statistics. Or multiple mappings may be broadcasted and then selected according to the instantaneous load either implicitly depending on the size of V and/or $V_{sum}$ or explicitly by signaling the index of one of the mappings.

Similarly, prefix-free source coding might be applied to Q as well. For example if $Q = 0$ would be the most likely, and probability of occurrence would decrease with its value, Huffman coding might be more efficient than using a fixed size 16 bit integer.

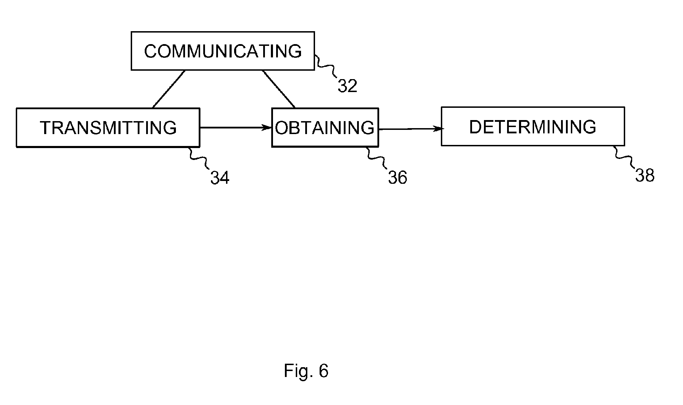

Fig. 6 illustrates a flow chart of an embodiment of a method suitable for a mobile transceiver 100 in a mobile communication system 300. The mobile communication system 300 further comprises a base station transceiver 200. The method comprises communicating 32 with the base station transceiver 200 using at least a first uplink channel 310, a second uplink channel 320, and a downlink broadcast channel 330. The first uplink channel 310 comprises a first plurality of uplink resources. The second uplink channel 320 comprises a second plurality of uplink resources.

The method further comprises transmitting 34 information related to a scheduling request to the base station transceiver 200 via the first uplink channel 310 using a first uplink resource from the first plurality of uplink resources.

The method further comprises obtaining 36 information related to a resource occupancy on the second uplink channel 320 and information related to a queue size for network payload transmissions on the second uplink channel 320 from the base station transceiver 200 via the downlink broadcast channel 330, in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status further indicates a collided, misreceived or nonexistent request for an uplink resource of the first plurality of uplink resources using a second value.

The method further comprises determining 38 information related to a second uplink resource of the second plurality of uplink resources based on the information related to the plurality of request statuses and the information related to the queue size.

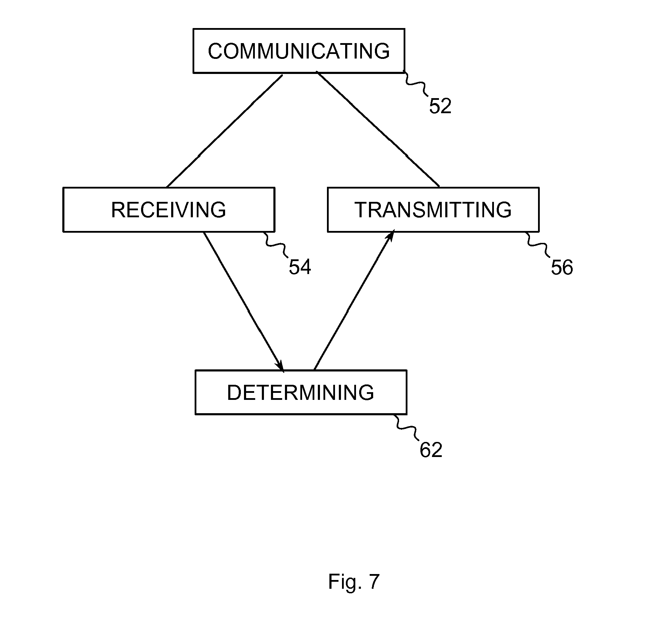

Fig. 7 illustrates a flow chart of an embodiment of a method suitable for a base station transceiver in a mobile communication system 300. The mobile communication system 300 further comprises one or more mobile transceivers 100. The method comprises communicating 52 with the one or more mobile transceivers 100 using at least a first uplink channel 310, a second uplink channel 320, and a downlink broadcast channel 330. The first uplink channel 310 comprises a first plurality of uplink resources. The second uplink channel 320 comprises a second plurality of uplink resources.

The method further comprises receiving 54 information related to one or more scheduling requests from the one or more mobile transceivers 100 via the first uplink channel 310 using one or more first uplink resources from the first plurality of uplink resources.

The method further comprises transmitting 56 information related to a resource occupancy on the second uplink channel 320 and information related to a queue size for network payload transmissions on the second uplink channel 320 to the one or more mobile transceivers 100 via the downlink broadcast channel 330, in response to the information related to the scheduling request. The information related to the resource occupancy comprises information related to a plurality of request statuses for the first plurality of uplink resources. A request status indicates a granted request for an uplink resource of the first plurality of uplink resources using a first value. The request status indicates a collided, misreceived or nonexistent request for an uplink resource of the first plurality of uplink resources using a second value.

The method further comprises determining 58 the information related to the resource occupancy on the second uplink channel (320) and the information related to a queue size for the network payload transmissions on the second uplink channel (320) based on the information related to the one or more scheduling requests.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiments may carry small payload traffic in uplink with reduced signaling overhead compared to LTE, in particular machine-type traffic. Embodiments may further avoid a requirement for detection of scheduling request collisions as compared to DQRAP. In consequence the required overhead (minimal over-provisioning factor N) may be smaller. Embodiments may further avoid a requirement for a scheduling request collision resolution queue. The downlink signaling overhead may be smaller compared to DQRAP.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) suitable for a mobile transceiver (100) in a mobile communication system (300) further comprising a base station transceiver (200), the apparatus (10) comprising
   a transceiver module (12) to:

   communicate with the base station transceiver (200) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,
   transmit information related to a scheduling request to the base station transceiver (200) via the first uplink channel (310) using a first uplink resource from the first plurality of uplink resources,
   obtain information related to a resource occupancy on the second uplink channel (320) and information related to a queue size for network payload transmissions on the second uplink channel (320) from the base station transceiver (200) via the downlink broadcast channel (330),

in response to the information related to the scheduling request, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or nonexistent request for an uplink resource of the first plurality of uplink resources using a second value; and

a control module (14) to determine information related to a second uplink resource of the second plurality of uplink resources, based on the information related to the plurality of request statuses and the information related to the queue size.

2. The apparatus (10) of claim 1 wherein the transceiver module (12) is further configured to transmit an information related to a network payload to the base station transceiver (200) via the second uplink channel (320) using a second uplink resource from the second plurality of uplink resources; and wherein the control module (14) is further configured to determine the information related to the scheduling request and information related to the first uplink resource, control the transmission of the information related to the scheduling request via the transceiver module (12) based on the information related to the first uplink resource, determine the information related to the second uplink resource based on a load-dependent association between the first and second uplink resources based on the information related to the plurality of request statuses and the information related to the queue size, and control the transmission of the information related to the network payload via the transceiver module (12) based on the information related to the second uplink resource.

3. The apparatus (10) of claim 1, wherein the information related to the plurality of request statuses comprises information related to a vector, wherein the information related to the vector corresponds to information related to a previous distribution of scheduling requests on the first plurality of uplink resources.

4. The apparatus (10) of claim 3,
wherein a request status is represented by a single bit providing a binary value, and/or
wherein the information related to the vector is based on a bit map,
wherein the information related to the vector is based on a variable length coding scheme,
wherein the information related to the vector is based on a run length coding scheme, wherein the information related to the vector is based on a list of non-zero indices,
or wherein the information related to the vector is based on a Huffman coding scheme,
and/or wherein the information related to the queue size is based on a Huffman coding scheme
and/or, if the information related to the previous distribution of scheduling requests on the first plurality of uplink resources indicates a misreceived scheduling request for a previous information related to the first uplink resource, wherein the control module (14) is configured to determine a new information related to a scheduling request, to control the transmission of the new information related to the scheduling request via the transceiver module (12), to determine information related to a new uplink resource based on the information related to the new scheduling request, and to control the transmission of the information related to the network payload via the transceiver module (12) based on the new information related to the uplink resource.

5. The apparatus (10) of claim 3, wherein the transceiver module (12) is further configured to obtain information related to a number of first uplink resources in the first plurality of uplink resources, wherein the control module (14) is configured to control the transmission of the information related to the scheduling request via the transceiver module (12) based on the information related to the number of the first uplink resources, and wherein the control module (14) is further configured to determine the information related to the second uplink resource based on the information related to the number of the first uplink resources.

6. The apparatus (10) of claim 2, wherein the control module (14) is configured to control the transmission of the information related to the scheduling request based on a comparison of the information related to the queue size and information related to a queue threshold, wherein the control module (14) is configured to control the transmission of the information related to the scheduling request based on a comparison of the information related to the resource occupancy and information related to a load threshold and/or wherein the transceiver module (12) is further configured to obtain information related to a request suspension via the downlink channel (330) and wherein the control module (14) is further configured to control the transmission of the information related to the scheduling request based on the information related to the request suspension.

7. The apparatus (10) of claim 2, wherein the transceiver module (12) is further configured to obtain information related to an acknowledgement for the information related to the network payload via the downlink broadcast channel (330), and, if the information related to the acknowledgment comprises information related to a negative acknowledgement, wherein the control module (14) is configured to determine a new information related to a scheduling request, to control the transmission of the new information related to the scheduling request via the transceiver module (12), to determine information related to a new uplink resource based on the information related to the new scheduling request, and to control the transmission of the information related to the network payload via the transceiver module (12) based on the new information related to the uplink resource.

8. An apparatus (20) suitable for a base station transceiver (200) in a mobile communication system (300) further comprising one or more mobile transceivers (100), the apparatus comprising
a transceiver module (22) to:

communicate with the one or more mobile transceivers (100) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,
receive information related to one or more scheduling requests from the one or more mobile transceivers (100) via the first uplink channel (310) using one or more first uplink resources from the first plurality of uplink resources,
transmit information related to a resource occupancy on the second uplink channel (320) and information related to a queue size for network payload transmissions on the second uplink channel (320) to the one or more mobile transceivers (100) via the downlink broadcast channel (330), in response to the information related to the scheduling request, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or nonexistent request for an uplink resource of the first plurality of uplink resources using a second value; and
a control module (24) to determine the information related to the resource occupancy on the second uplink channel (320) and information related to the queue size for the network payload transmissions on the second uplink channel (320) based on the information related to the one or more scheduling requests.

9. The apparatus (20) of claim 8, wherein the transceiver module is further configured to receive information related to a network payload from the one or more mobile transceivers (100) via the second uplink channel (320) using one or more second uplink resources from the second plurality of uplink resources and to transmit information related to an acknowledgement to the one or more mobile transceivers (100) via the downlink broadcast channel (330), and wherein the control module is further configured to determine the information related to the acknowledgement, based on the information related to the network payload.

10. The apparatus (20) of claim 8, wherein the information related to the one or more scheduling requests comprises information related to a distribution of scheduling request on the first plurality of uplink resources, and wherein the information related to the plurality of request statuses comprises information related to a vector, and wherein the control module (24) is configured to determine the information related to the vector based on the information related to the distribution of scheduling request on the first plurality of uplink resources.

11. The apparatus (20) of claim 10,
wherein a request status is represented by a single bit providing a binary value, and/or
wherein the control module (24) is configured to determine the information related to the vector based on a bit map,
wherein the control module (24) is configured to determine the information related to the vector based on a variable length coding scheme,
wherein the control module (24) is configured to determine the information related to the vector based on a run length coding scheme,
wherein the control module (24) is configured to determine the information related to the vector based on a list of non-zero indices,
or wherein the control module (24) is configured to determine the information related to the vector based on a Huffman coding scheme,
and/or wherein the control module (24) is configured to determine the information related to the queue size based on a Huffman coding scheme.

12. The apparatus (20) of claim 10,
wherein the transceiver module (22) is further configured to transmit information related to a number of first uplink resources in the first plurality of uplink resources and wherein the control module (24) is configured to determine the information related to a number of first uplink resources in the first plurality of uplink resources based on an information related to a load of at least a part of the mobile communication system (300) and/or wherein the transceiver module (22) is further configured to transmit information related to a request suspension via the downlink channel (330) and wherein the control module (24) is further configured to determine the information related to the request suspension based on the information related to the queue size and/or based on an information related to a load of at least a part of the mobile communication system (300).

13. A method suitable for a mobile transceiver (100) in a mobile communication system (300) further comprising a base station transceiver (200), the method comprising

communicating (32) with the base station transceiver (200) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,

transmitting (34) information related to a scheduling request to the base station transceiver (200) via the first uplink channel (310) using a first uplink resource from the first plurality of uplink resources,

obtaining (36) information related to a resource occupancy on the second uplink channel (320) and information related to a queue size for network payload transmissions on the second uplink channel (320) from the base station transceiver (200) via the downlink broadcast channel (330), in response to the information related to the scheduling request, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or nonexistent request for an uplink resource of the first plurality of uplink resources using a second value; and

determining (38) information related to a second uplink resource of the second plurality of uplink resources based on the information related to the plurality of request statuses and the information related to the queue size.

14. A method suitable for a base station transceiver in a mobile communication system (300) further comprising one or more mobile transceivers (100), the method comprising co

mmunicating (52) with the one or more mobile transceivers (100) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,

receiving (54) information related to one or more scheduling requests from the one or more mobile transceivers (100) via the first uplink channel (310) using one or more first uplink resource from the first plurality of uplink resources,

transmitting (56) information related to a resource occupancy on the second uplink channel (320) and information related to a queue size for network payload transmissions on the second uplink channel (320) to the one or more mobile transceivers (100) via the downlink broadcast channel (330), in response to the information related to the scheduling request, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or nonexistent request for an uplink resource of the first plurality of uplink resources using a second value; and

determining (58) the information related to the resource occupancy on the second uplink channel (320) and the information related to a queue size for the network payload transmissions on the second uplink channel (320) based on the information related to the one or more scheduling requests.

15. A computer program having a program code for performing at least one of the methods of claims 13 and 14, when the computer program is executed on a computer, a processor, or a programmable hardware component.

**Amended claims in accordance with Rule 137(2) EPC.**

1. An apparatus (10) suitable for a mobile transceiver (100) in a mobile communication system (300) further comprising a base station transceiver (200), the apparatus (10) comprising
a transceiver module (12) to:

communicate with the base station transceiver (200) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,

transmit information related to a scheduling request to the base station transceiver (200) via the first uplink channel (310) using a first uplink resource from the first plurality of uplink resources,

obtain information related to a resource occupancy on the second uplink channel (320) and information related to a queue size for network payload transmissions on the second uplink channel (320) from the base station transceiver (200) via the downlink broadcast channel (330), in response to the information related to the scheduling request, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or non-existent request for an uplink resource of the first plurality of uplink resources using a second value; and a control module (14) to determine information related to a second uplink resource of the second plurality of uplink resources, based on the information related to the plurality of request statuses and the information related to the queue size.

2. The apparatus (10) of claim 1 wherein the transceiver module (12) is further configured to transmit an information related to a network payload to the base station transceiver (200) via the second uplink channel (320) using a second uplink resource from the second plurality of uplink resources; and wherein the control module (14) is further configured to determine the information related to the scheduling request and information related to the first uplink resource, control the transmission of the information related to the scheduling request via the transceiver module (12) based on the information related to the first uplink resource, determine the information related to the second uplink resource based on a load-dependent association between the first and second uplink resources based on the information related to the plurality of request statuses and the information related to the queue size, and control the transmission of the information related to the network payload via the transceiver module (12) based on the information related to the second uplink resource.

3. The apparatus (10) of claim 1, wherein the information related to the plurality of request statuses comprises information related to a vector, wherein the information related to the vector corresponds to information related to a previous distribution of scheduling requests on the first plurality of uplink resources.

4. The apparatus (10) of claim 3,
wherein a request status is represented by a single bit providing a binary value, and/or
wherein the information related to the vector is based on a bit map,
wherein the information related to the vector is based on a variable length coding scheme,
wherein the information related to the vector is based on a run length coding scheme, wherein the information related to the vector is based on a list of nonzero indices,
or wherein the information related to the vector is based on a Huffman coding scheme,
and/or wherein the information related to the queue size is based on a Huffman coding scheme
and/or, if the information related to the previous distribution of scheduling requests on the first plurality of uplink resources indicates a misreceived scheduling request for a previous information related to the first uplink resource, wherein the control module (14) is configured to determine a new information related to a scheduling request, to control the transmission of the new information related to the scheduling request via the transceiver module (12), to determine information related to a new uplink resource based on the information related to the new scheduling request, and to control the transmission of the information related to the network payload via the transceiver module (12) based on the new information related to the uplink resource.

5. The apparatus (10) of claim 3, wherein the transceiver module (12) is further configured to obtain information related to a number of first uplink resources in the first plurality of uplink resources, wherein the control module (14) is configured to control the transmission of the information related to the scheduling request via the transceiver module (12) based on the information related to the number of the first uplink resources, and wherein the control module (14) is further configured to determine the information related to the second uplink resource based on the information related to the number of the first uplink resources.

6. The apparatus (10) of claim 2, wherein the control module (14) is configured to control the transmission of the information related to the scheduling request based on a comparison of the information related to the queue size and information related to a queue threshold, wherein the control module (14) is configured to control the transmission of the information related to the scheduling request based on a comparison of the information related to the resource occupancy and information related to a load threshold and/or wherein the transceiver module (12) is further configured to obtain information related to a request suspension via the downlink channel (330) and wherein the control module (14) is further configured to control the transmission of the information related to the scheduling request based on the information related to the request suspension.

7. The apparatus (10) of claim 2, wherein the transceiver module (12) is further configured to obtain information related to an acknowledgement for the information related to the network payload via the downlink broadcast channel (330), and, if the information related to the acknowledgment comprises information related to a negative acknowledgement, wherein the control module (14) is configured to determine a new information related to a scheduling request, to control the transmission of the new information related to the scheduling request via the transceiver module (12), to determine information related to a new uplink resource based on the information related to the new scheduling request, and to control the transmission of the information related to the network payload via the transceiver module (12) based on the new information related to the uplink resource.

8. An apparatus (20) suitable for a base station transceiver (200) in a mobile communication system (300) further comprising one or more mobile transceivers (100), the apparatus comprising
a transceiver module (22) to:

   communicate with the one or more mobile transceivers (100) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,
   receive information related to one or more scheduling requests from the one or more mobile transceivers (100) via the first uplink channel (310) using one or more first uplink resources from the first plurality of uplink resources,
   transmit information related to a resource occupancy on the second uplink channel (320) and information related to a queue size for network payload transmissions on the second uplink channel (320) to the one or more mobile transceivers (100) via the downlink broadcast channel (330), in response to the information related to the one or more scheduling requests, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or non-existent request for an uplink resource of the first plurality of uplink resources using a second value; and

   a control module (24) to determine the information related to the resource occupancy on the second uplink channel (320) and information related to the queue size for the network payload transmissions on the second uplink channel (320) based on the information related to the one or more scheduling requests.

9. The apparatus (20) of claim 8, wherein the transceiver module is further configured to receive information related to a network payload from the one or more mobile transceivers (100) via the second uplink channel (320) using one or more second uplink resources from the second plurality of uplink resources and to transmit information related to an acknowledgement to the one or more mobile transceivers (100) via the downlink broadcast channel (330), and wherein the control module is further configured to determine the information related to the acknowledgement, based on the information related to the network payload.

10. The apparatus (20) of claim 8, wherein the information related to the one or more scheduling requests comprises information related to a distribution of scheduling requests on the first plurality of uplink resources, and wherein the information related to the plurality of request statuses comprises information related to a vector, and wherein the control module (24) is configured to determine the information related to the vector based on the information related to the distribution of scheduling request on the first plurality of uplink resources.

11. The apparatus (20) of claim 10,
wherein a request status is represented by a single bit providing a binary value, and/or
wherein the control module (24) is configured to determine the information related to the vector based on a bit map,
wherein the control module (24) is configured to determine the information related to the vector based on a variable length coding scheme,
wherein the control module (24) is configured to determine the information related to the vector based on a run length coding scheme,
wherein the control module (24) is configured to determine the information related to the vector based on a list of non-zero indices,
or wherein the control module (24) is configured to determine the information related to the vector based on a Huffman coding scheme, and/or wherein the control module (24) is configured to determine the information related to the queue size based on a Huffman coding scheme.

12. The apparatus (20) of claim 10, wherein the transceiver module (22) is further configured to transmit information related to a number of first uplink resources in the first plurality of uplink resources and wherein the control module (24) is configured to determine the information related to a number of first uplink resources in the first plurality of uplink resources based on an information related to a load of at least a part of the mobile communication system (300) and/or wherein the transceiver module (22) is further configured to transmit information related to a request suspension via the downlink channel (330) and wherein the control module (24) is further configured to determine the information related to the request suspension based on the information related to the queue size and/or based on an information related to a load of at least a part of the mobile communication system (300).

13. A method suitable for a mobile transceiver (100) in a mobile communication system (300) further comprising a base station transceiver (200), the method comprising

communicating (32) with the base station transceiver (200) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,
transmitting (34) information related to a scheduling request to the base station transceiver (200) via the first uplink channel (310) using a first uplink resource from the first plurality of uplink resources,
obtaining (36) information related to a resource occupancy on the second uplink channel (320) and information related to a queue size for network payload transmissions on the second uplink channel (320) from the base station transceiver (200) via the downlink broadcast channel (330), in response to the information related to the scheduling request, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or non-existent request for an uplink resource of the first plurality of uplink resources using a second value; and
determining (38) information related to a second uplink resource of the second plurality of uplink resources based on the information related to the plurality of request statuses and the information related to the queue size.

14. A method suitable for a base station transceiver in a mobile communication system (300) further comprising one or more mobile transceivers (100), the method comprising co

mmunicating (52) with the one or more mobile transceivers (100) using at least a first uplink channel (310), a second uplink channel (320), and a downlink broadcast channel (330), wherein the first uplink channel (310) comprises a first plurality of uplink resources, and wherein the second uplink channel (320) comprises a second plurality of uplink resources,
receiving (54) information related to one or more scheduling requests from the one or more mobile transceivers (100) via the first uplink channel (310) using one or more first uplink resource from the first plurality of uplink resources,
transmitting (56) information related to a resource occupancy on the second uplink channel (320) and information related to a queue size for network payload transmissions on the second uplink channel (320) to the one or more mobile transceivers (100) via the downlink broadcast channel (330), in response to the information related to the one or more scheduling requests, wherein the information related to the resource occupancy comprises information related to a plurality of request statuses for the first plurality of uplink resources, and wherein a request status indicates a granted request for an uplink resource of the first plurality of uplink resources using a first value, and wherein the request status indicates a collided, misreceived or non-existent request for an uplink resource of the first plurality of uplink resources using a second value; and
determining (58) the information related to the resource occupancy on the second uplink channel (320) and the information related to a queue size for the network payload transmissions on the second uplink channel (320) based on the information related to the one or more scheduling requests.

15. A computer program having a program code for performing at least one of the methods of claims 13 and 14, when the computer program is executed on a computer, a processor, or a programmable hard-

**EP 3 062 573 A1**

ware component.

Fig. 1

INFORMATION RELATED TO A SCHEDULING REQUEST
310

INFORMATION RELATED TO A RESOURCE OCCUPANCY + QUEUE SIZE
330

INFORMATION RELATED TO THE NETWORK PAYLOAD
320

100
200

Fig. 1a

Device ⌇2100                                    Base station ⌇2200

SR

2002

DL feedback Q, V

2004

Determine UR

Small packet on UR

2006

ACK

2008

Fig. 2

Fig. 3

Fig. 3a

R=7

M x N = 8 SRs

L=4

4004

4002

Fig. 4

k = 8 ~5002
M = 4 ~5004
SR sent in sf = 1
Q = 0 ~5010

5006, 5100, 5014, 5016, 5008 — Vsum 6

| V | 1 | 0 | 1 | 1 | 1 | 0 | 1 | 1 |
|---|---|---|---|---|---|---|---|---|
| L | 0 | - | 1 | 2 | 3 | - | 4 | 5 |
| P | 0 | - | 1 | 2 | 3 | - | 4 | 5 |
| m | 0 | - | 1 | 2 | 3 | - | 0 | 1 |
| sf | 9 | - | 9 | 9 | 9 | - | 10 | 10 |

SR sent in sf = 2
Q = 2 ~5012, 5020, 5018 — Vsum 3

| V | 1 | 0 | 0 | 0 | 0 | 0 | 1 | 1 |
|---|---|---|---|---|---|---|---|---|
| L | 0 | - | - | - | - | - | 1 | 2 |
| P | 2 | - | - | - | - | - | 3 | 4 |
| m | 2 | - | - | - | - | - | 3 | 0 |
| sf | 10 | - | - | - | - | - | 10 | 11 |

SR sent in sf = 3
Q = 1 — Vsum 2

| V | 1 | 0 | 0 | 0 | 0 | 0 | 0 | 1 |
|---|---|---|---|---|---|---|---|---|
| L | 0 | - | - | - | - | - | - | 1 |
| P | 1 | - | - | - | - | - | - | 2 |
| m | 1 | - | - | - | - | - | - | 2 |
| sf | 11 | - | - | - | - | - | - | 11 |

SR sent in sf = 4
Q = 0 — Vsum 7

| V | 1 | 1 | 1 | 0 | 1 | 1 | 1 | 1 |
|---|---|---|---|---|---|---|---|---|
| L | 0 | 1 | 2 | - | 3 | 4 | 5 | 6 |
| P | 0 | 1 | 2 | - | 3 | 4 | 5 | 6 |
| m | 0 | 1 | 2 | - | 3 | 0 | 1 | 2 |
| sf | 12 | 12 | 12 | - | 12 | 13 | 13 | 13 |

SR sent in sf = 5
Q = 3 — Vsum 7

| V | 1 | 1 | 1 | 0 | 1 | 1 | 1 | 1 |
|---|---|---|---|---|---|---|---|---|
| L | 0 | 1 | 2 | - | 3 | 4 | 5 | 6 |
| P | 3 | 4 | 5 | - | 6 | 7 | 8 | 9 |
| m | 3 | 0 | 1 | - | 2 | 3 | 0 | 1 |
| sf | 13 | 14 | 14 | - | 14 | 14 | 15 | 15 |

Fig. 5 (Part 1)

SR sent in sf 6
Q 6

| V | 0 | 1 | 1 | 0 | 0 | 0 | 0 | 0 | Vsum |
|---|---|---|---|---|---|---|---|---|------|
| L | - | 0 | 1 | - | - | - | - | - | 2 |
| P | - | 6 | 7 | - | - | - | - | - | |

m - 2 3 - - - - -
sf - 15 15 - - - - -

SR sent in sf 7
Q 4

| V | 0 | 1 | 1 | 0 | 0 | 0 | 0 | 0 | Vsum |
|---|---|---|---|---|---|---|---|---|------|
| L | - | 0 | 1 | - | - | - | - | - | 2 |
| P | - | 4 | 5 | - | - | - | - | - | |

m - 0 1 - - - - -
sf - 16 16 - - - - -

SR sent in sf 8
Q 2

| V | 0 | 1 | 1 | 0 | 0 | 0 | 0 | 0 | Vsum |
|---|---|---|---|---|---|---|---|---|------|
| L | - | 0 | 1 | - | - | - | - | - | 2 |
| P | - | 2 | 3 | - | - | - | - | - | |

m - 2 3 - - - - -
sf - 16 16 - - - - -

SR sent in sf 9
Q 0

Fig. 5 (Part 2)

Fig. 6

Fig. 7

Europäisches
Patentamt

European
Patent Office

Office européen
des brevets

# EUROPEAN SEARCH REPORT

Application Number

EP 15 30 5294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALONSO L ET AL: "A near-optimum MAC protocol based on the distributed queueing random access protocol (DQRAP) for a CDMA mobile communication system", IEEE JOURNAL ON SELECTED AREAS IN COMMUNICATIONS, IEEE SERVICE CENTER, PISCATAWAY, US, vol. 18, no. 9, 1 September 2000 (2000-09-01), pages 1701-1718, XP011450080, ISSN: 0733-8716, DOI: 10.1109/49.872957 | 1-4, 7-11, 13-15 | INV. H04W72/04 H04W72/12 |
| A | * page 1701 - page 1704; figures 1,2 * | 5,6,12 | |
| X | LAYA ANDRES ET AL: "Is the Random Access Channel of LTE and LTE-A Suitable for M2M Communications? A Survey of Alternatives", IEEE COMMUNICATIONS SURVEYS & TUTORIALS, IEEE, USA, vol. 16, no. 1, 1 January 2014 (2014-01-01), pages 4-16, XP011539562, DOI: 10.1109/SURV.2013.111313.00244 [retrieved on 2014-02-07] | 1-4, 7-11, 13-15 | |
| A | * page 11 - page 14 * | 5,6,12 | TECHNICAL FIELDS SEARCHED (IPC) H04W |
| X | KARTSAKLI E ET AL: "Cross-layer enhancement for wlan systems with heterogeneous traffic based on DQCA", IEEE COMMUNICATIONS MAGAZINE, IEEE SERVICE CENTER, PISCATAWAY, US, vol. 46, no. 6, 1 June 2008 (2008-06-01), pages 60-66, XP011227787, ISSN: 0163-6804, DOI: 10.1109/MCOM.2008.4539467 * page 60 - page 64 * | 1,8,13, 14 | |

The present search report has been drawn up for all claims

| Place of search | Date of completion of the search | Examiner |
|---|---|---|
| The Hague | 19 August 2015 | Martos Riaño, Demian |

EPO FORM 1503 03.82 (P04C01)